# EUROPEAN PATENT APPLICATION

(11) **EP 3 588 740 A1**
(43) Date of publication of application: **01.01.2020**
(21) Application number: 18179016.3
(22) Date of filing: 21.06.2018
(51) Int. Cl.: H02K 1/14, H02K 15/02, H02K 15/06

(54) **GENERATOR FOR A WIND TURBINE, AND METHOD OF MANUFACTURING A STATOR FOR A GENERATOR**

(71) Applicant: Siemens Gamesa Renewable Energy A/S, 7330 Brande (DK)
(72) Inventor: Thougaard, Hans-Joergen, 8600 Silkeborg (DK); Samanta, Subhra, 7430 Ikast (DK)
(74) Representative: Aspacher, Karl-Georg

(57) **Abstract**

The present invention relates to a generator, in particular for a wind turbine, comprising: a stator with a plurality of teeth (1) and slots (2) for coil windings (20); and a rotor which is rotatable arranged around or inside the stator and comprises at least one permanent magnet. At least one tooth (1) comprises a protrusion (6) having at least one inclined structure (7). The present invention also relates to a method of manufacturing such a stator for the generator.

## Description

### Field of invention

The present invention relates to the field of wind turbines. In particular, the present invention relates to a generator for a wind turbine and to a method of manufacturing a stator of such a generator.

### Art Background

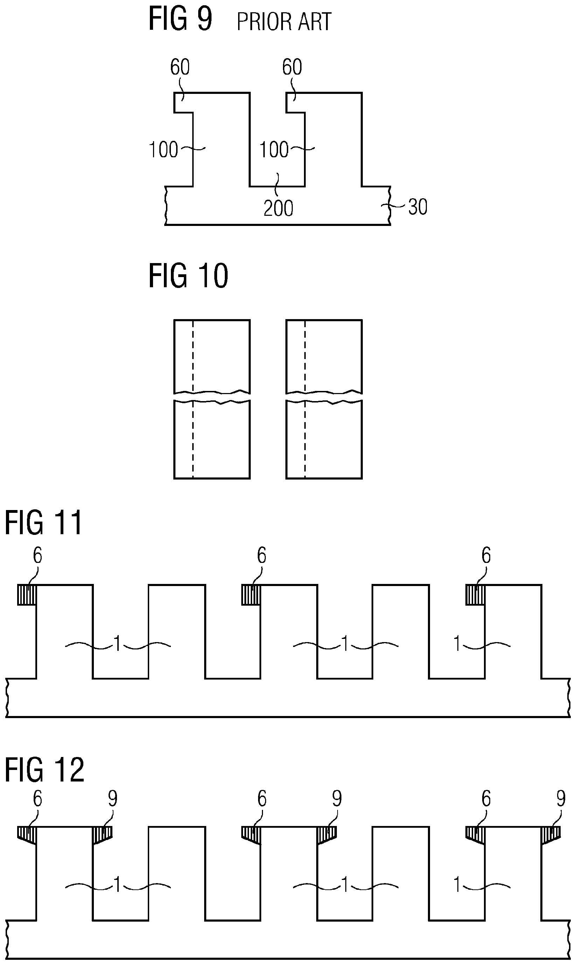

Fig. 9 shows a cross sectional view of parts of a generator according to the prior art, and Fig. 10 shows a plan view of the generator according to the prior art. The generator comprises a stator with a plurality of teeth 100 and slots 200 therebetween for coil windings. A rotor comprising a plurality of permanent magnets can rotatable be arranged around the stator. Each tooth 100 comprises a protrusion 60 protruding, in a distance from a stator yoke 30, in the circumferential direction. The protrusion 60 serves to increase the magnetic generator performance and retain the coil windings in the slots 200.

To insert and wind a concentrated coil winding around the stator teeth 100, there is a need of a long end-winding. If the end-winding is not long enough, their insertion is sometimes burdensome. If the end-winding is prolonged only up to minimum length required to form the coil winding, it might be still possible to insert the winding, but difficulties to move the copper around a tip of the tooth 100 might cause damage of a coil insulation.

The minimum length of end-winding is usually defined by a creeping distance for a particular voltage class plus a coil width plus a half of the tooth width. To be able to insert the coil winding into the slot 200 without damaging the coil insulation, it is considered that almost twice of the minimum length of end winding is needed. However, a lot of material, particularly copper, is wasted in this manner and losses in the copper are high due to the extra end-turn length needed, therefore payback time will be large.

There may be a need for a generator and a method of manufacturing a stator of such a generator, which overcome the problems mentioned above.

### Summary of the Invention

This need may be met by the subject matters according to the independent claims 1 and 8. The present invention is further developed as set forth in the dependent claims.

According to a first aspect of the invention, there is provided a generator, in particular for a wind turbine, comprising a stator with a plurality of teeth and slots for coil windings, wherein the teeth extend upright from a yoke of the stator in a radial direction of the stator; a rotor which is rotatable arranged around or inside the stator and comprises at least one permanent magnet; the teeth extend, substantially in parallel to each other, in an axial direction of the stator perpendicular to the radial direction, wherein each tooth has a first end and a second end in the axial direction; each tooth has a tooth width in a circumferential direction of the stator perpendicular to the radial direction and the axial direction; at least one tooth comprises at least one first protrusion protruding, in a distance from the stator yoke, in the circumferential direction, wherein the first protrusion has a protruding length in the circumferential direction; and the first protrusion comprises at least one first inclined structure so that the protruding length of the first protrusion decreases towards the first end and/or towards the second end of the tooth.

The generator according to the present invention offers the following advantages. The length of the end winding is reduced so that less copper is used, the efficiency is increased, and the so called "payback time" is reduced. Moreover, a higher torque in case of the same frame size of the machine, where space is saved in the end winding, can be used to increase lamination stack of the machine. Due to easier insertion of the coil windings, the manufacturing cost and the lead time during coil insertion are reduced. At the same time, the risk of damaging the coil insulation and thus a risk of failure of the machine during production as well as during service lifetime is reduced.

Finally, due to the shortened end-winding, less copper in the winding is used, thereby reducing the machine weight and costs.

Preferably, the first inclined structure comprises at least one step so that the protruding length of the first protrusion stepwise decreases towards the first end and/or towards the second end of the tooth. Such a configuration can be readily manufactured under lower costs by means of punching.

Preferably, the first protrusion is formed at a first side of the tooth in the circumferential direction, and the same tooth comprises a second protrusion at a second side of the tooth in the circumferential direction opposite to the first side. The second protrusion protrudes in a distance from the stator yoke, in the circumferential direction, wherein the second protrusion has a protruding length in the circumferential direction; and the second protrusion comprises at least one second inclined structure so that the protruding length of the second protrusion decreases towards the first end and/or towards the second end of the tooth. Due to the provision of two protrusions, the coil windings can be more reliably retained in the corresponding slot.

More preferred, the first and second protrusions are symmetrically formed at the tooth so that the manufacturing costs can be kept low.

Preferably, a top surface of the tooth is a plane surface and covers at least one of the first and second protrusions. Thereby, the risk of damaging the coils insulation is further reduced.

Preferably, the first protrusion comprises a lower surface facing the stator yoke and being inclined such that a distance between the lower surface and the stator yoke increases along the circumferential direction from the tooth towards the slot. The lower surface has a contribution to avoid magnetic saturation.

According to a second aspect of the invention, there is provided a wind turbine comprising a generator according to the present invention.

According to a third aspect of the invention, there is provided a method of manufacturing a stator for a generator, in particular for a wind turbine, comprising the steps of: providing a stator yoke; providing a plurality of teeth extending upright from the stator yoke in a radial direction of the stator such that the teeth extend, substantially in parallel to each other, in an axial direction of the stator being perpendicular to the radial direction, wherein each tooth has a first end and a second end in the axial direction; and each tooth has a tooth width in a circumferential direction of the stator being perpendicular to the radial direction and the axial direction; providing at least one first protrusion at at least one tooth, the first protrusion protrudes, in a distance from the stator yoke, in the circumferential direction, wherein the first protrusion has a protruding length in the circumferential direction. The method further comprises a step of punching the first protrusion to form at least one first inclined structure where the protruding length of the first protrusion decreases towards the first end and/or towards the second end of the tooth. The method according to the present invention provides a stator of a generator having the same advantages as discussed above.

Preferably, in the punching step, the at least one step is formed by punching the first protrusion so that the protruding length of the first protrusion stepwise decreases towards the first end and/or towards the second end of the tooth, wherein a width of the step in the circumferential direction substantially corresponds to a thickness of a corresponding layer of coil windings. The method further comprises a step of winding the layers of the coil windings in slots which are formed between adjacent teeth. Thereby, the first inclined structure matches to the layer of coil windings so that the insertion of each layer of coil windings can be facilitated.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a cross sectional view of parts of a generator according to a first embodiment of the present invention;
Fig. 2 shows a plan view of the parts of the generator according to the first embodiment of the present invention;
Fig. 3 shows a cross sectional view of parts of a generator according to a second embodiment of the present invention;
Fig. 4 shows a plan view of the parts of the generator according to the second embodiment of the present invention;
Fig. 5 shows a step of winding a coil winding in a stator according to the prior art;
Fig. 6 shows a step of winding a coil winding in a stator according to the first embodiment of the present invention;
Fig. 7 shows a step of winding a coil winding in a stator according to the prior art;
Fig. 8 shows a step of winding a coil winding in a stator according to the second embodiment of the present invention;
Fig. 9 shows a cross sectional view of parts of a generator according to the prior art;
Fig. 10 shows a plan view of the parts of the generator according to the prior art;
Fig. 11 shows a modification of the first embodiment; and
Fig. 12 shows a modification of the second embodiment.

### Detailed Description

The illustrations in the drawings are schematically. It is noted that in different figures, similar or identical elements are provided with the same reference signs.

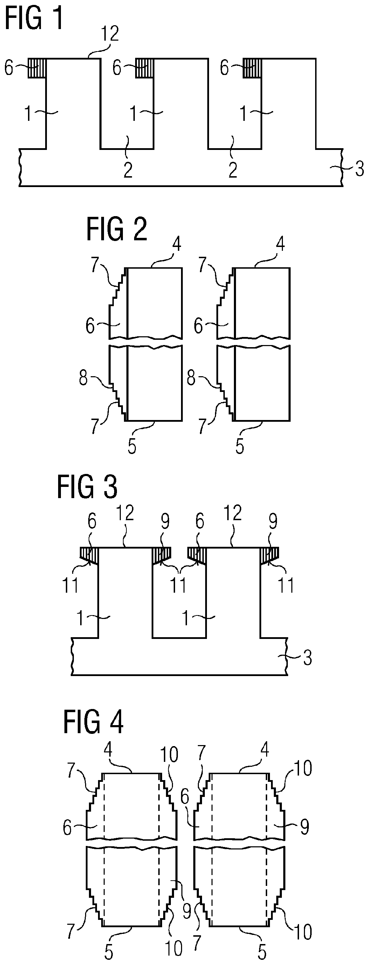

Fig. 1 shows a cross sectional view of parts of a generator according to a first embodiment of the present invention; and Fig. 2 shows a plan view of the parts of the generator according to the first embodiment of the present invention.

The generator is used in a wind turbine. The generator comprises a stator and a rotor. The stationary stator is usually incorporated in a nacelle which is positioned on top of a tower of the wind turbine. Rotor blades are fixed to the rotor, which is rotatably movable around the stator (outer runner rotor). Alternatively, the rotor can be arranged to be moveable inside the stator (inner runner rotor). Permanent magnets are arranged in a circumferential direction at the inner surface of rotor for an outer runner rotor or on the outer surface for an inner runner rotor.

The stator comprises a stator yoke 3 and a number of parallel teeth 1 extending from the outer surface of the stator yoke 3. The teeth 1 are arranged with a certain distance from each other, a gap or slot 2 is provided for layers of coil windings 20, which are not shown in Figs. 1A and 1B. When the rotor is rotated, electricity is generated in the layers of coil windings 20.

In the following, the geometrical arrangement of the stator and particularly of the teeth 1 is given: The teeth 1 extend upright from a stator yoke 3 in a radial direction of the stator. The teeth 1 extend, substantially in parallel to each other, in an axial direction of the stator perpendicular to the radial direction, wherein each tooth 1 has a first end 4 and a second end 5 in the axial direction. Each tooth 1 has a tooth width in a circumferential direction of the stator perpendicular to the radial direction and the axial direction. Each tooth 1 comprises at least one first protrusion 6 protruding, in a distance from the stator yoke 3, in the circumferential direction, wherein the first protrusion 6 has a protruding length in the circumferential direction.

According to the first embodiment, the first protrusion 6 comprises two inclined structures 7 where the protruding length of the first protrusion 1 decreases towards the first end 4 and towards the second end 5 of the tooth 1.

The first inclined structures 7 are manufactured by means of a punch so that it comprises a plurality of steps 8 where the protruding length of the first protrusion 6 stepwise decreases towards the first end 4 and towards the second end 5 of the tooth 1. The steps 8 are in the order of 0.5 to 0.6 mm. However, the dimensions of the steps 8 can be made smaller or larger as needed. The steps 8 can be incrementally small to form a nearly linear surface. However, it is preferred that the first inclined structures 7 comprise discrete steps 8 as they can be readily manufactured by punching.

The stepping down in width of the first inclined structures 7 is done either for each coil winding layer 20, or it is done in steps of a certain number of coil winding layers 20. The number of laminations of each step 8 can be chosen based on the costs of punching tool and an optimization of the end winding length extension.

Each tooth 1 comprises a top surface 12 which is a plane surface and covers the first protrusion 6. Thereby, an insertion of the coil windings 20 is facilitated and the risk of damaging the insulation is further reduced.

The first protrusion 6 comprises a lower surface 11 facing the stator yoke 3 and being inclined such that a distance between the lower surface 11 and the stator yoke 3 increases along the circumferential direction from the tooth 1 towards the slot 2.

Fig. 3 shows a cross sectional view of parts of a generator according to a second embodiment of the present invention; and Fig. 4 shows a plan view of the parts of the generator according to the second embodiment of the present invention. In the following, only the differences between the first and second embodiments are mentioned. For the rest, the second embodiment has the same or similar features like the first embodiment.

The first protrusion 6 is formed at a first side of the tooth 1 in the circumferential direction, and the same tooth 1 comprises a second protrusion 9 at a second side of the tooth 1 in the circumferential direction opposite to the first side. The second protrusion 9 protrudes in a distance from the stator yoke 3, in the circumferential direction, wherein the second protrusion 9 has a protruding length in the circumferential direction. The second protrusion 9 comprises two second inclined structures 10 where the protruding length of the second protrusion 9 decreases towards the first end 4 and towards the second end 5 of the tooth 1. As shown in the plan view of Fig. 4, the first and second protrusions 6, 9 are symmetrically formed at the tooth 1, whereby the design and manufacturing costs are kept low.

A method of manufacturing a stator of the generator comprises a step of providing a stator yoke 3 of the stator and providing a plurality of teeth 1 extending upright from the stator yoke 3 in a radial direction of the stator such that the teeth 1 extend, substantially in parallel to each other, in an axial direction of the stator perpendicular to the radial direction. As described in the first embodiment, each tooth 1 has a first end 4 and a second end 5 in the axial direction, and each tooth 1 has a tooth width in a circumferential direction of the stator perpendicular to the radial direction and the axial direction.

The method comprises a step of providing a first protrusion 6 at each tooth 1, wherein the first protrusion 6 protrudes, in a distance from the stator yoke 3, in the circumferential direction, wherein the first protrusion 6 has a protruding length in the circumferential direction.

While or after providing the first protrusion 6, the first protrusion 6 is punched to form first inclined structures 7 at the first and second ends 4, 5 of the tooth 1, where the protruding length of the first protrusion 6 decreases towards the first end 4 and towards the second end 5 of the tooth 1.

In the punching step, a plurality of steps 8 is formed by punching the first protrusion 6 so that the protruding length of the first protrusion stepwise decreases towards the first end 4 and towards the second end 5 of the tooth 1, wherein a width of the steps 8 in the circumferential direction corresponds to a thickness of a corresponding layer of coil windings 20. The method further comprises a step of winding these layers of the coil windings 20 in slots 2 which are formed between adjacent teeth 1. Thereby, the first inclined structures 7 match to the layer of coil windings 20 so that the insertion of each layer of coil windings 20 can be facilitated.

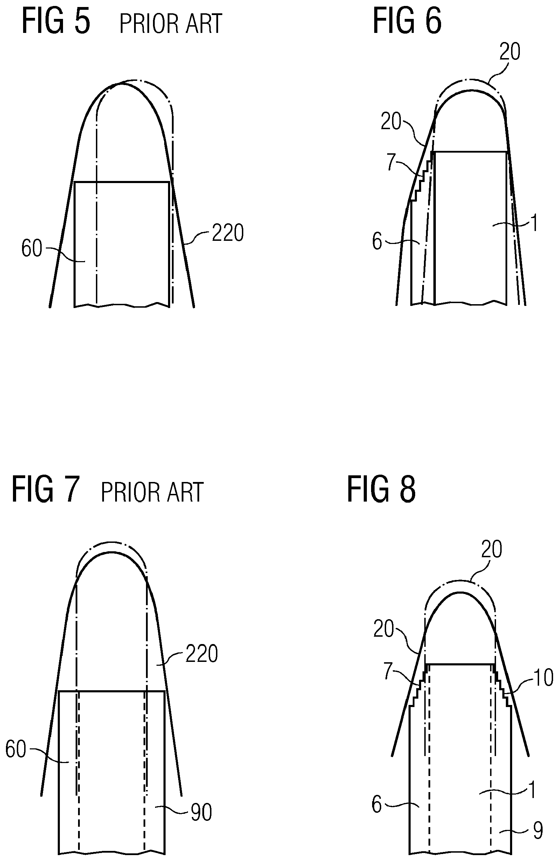

Fig. 5 shows a step of winding a coil winding 220 in a stator according to the prior art, and Fig. 6 shows a step of winding a coil winding 20 in a stator according to the first embodiment of the present invention. The coil windings 20 and 220 before insertion are shown in thin lines, while the coil windings 20 and 220 after insertion are shown in bold lines.

Since the coil windings 220 in the prior art generator usually have a strong stiffness, it is quite burdensome to move the coil windings 220 over the sharp edge of the prior art protrusion 60. The stiffness of the coil windings 220 only allows a bending radius which is relatively large. In order to avoid damages of the insulation, the coils windings 220 of the prior art must therefore be provided in a sufficiently large length.

As shown in Fig. 6, the first embodiment offers the advantage that the risk of damaging the coil windings 20 is largely reduced due to the provision of the first inclined structures 7 in the tooth 1. At the same time, the coils windings 20 of the first embodiment can therefore be provided in a shorter length compared with the prior art of Fig. 5. In general, the possible reduction of the end turn length of the coils windings 20 will depend on the stiffness of the coil.

Fig. 7 shows a step of winding a coil winding 220 in a stator according to the prior art, and Fig. 8 shows a step of winding a coil winding 20 in a stator according to the second embodiment of the present invention. The coil windings 20 and 220 before insertion are shown in thin lines, while the coil windings 20 and 220 after insertion are shown in bold lines.

The second embodiment shown in Fig. 8 comprises the second protrusion 9 in addition to the first protrusion 6, while the first and second protrusions 6, 9 are both equipped with the first and second inclined structures 7, 10, respectively. In the second embodiment, the risk of damaging the coil windings 20 is even more reduced due to the provision of the first and second inclined structures 7, 10 in the tooth 1. At the same time, the coils windings 20 of the second embodiment can therefore be provided in a much shorter length compared with the prior art of Fig. 7.

In summary, both embodiments offer the following benefits: less end winding length which will reduce copper losses; higher efficiency; reduced payback time; higher torque in case of same frame size of the machine where space saved in the end winding 20 can be used to increase lamination stack of the machine; lower manufacturing cost due to easier insertion of coil windings 20; less lead time during coil insertion; reduced risk of damaging coil insulation, and thereby reduced risk of failure of the machine during production as well as during service lifetime; less copper in the coil windings 20, thereby less machine weight and less cost, etc.

Fig. 11 shows a modification of the first embodiment. In this modification, the teeth 1 are alternately provided with and without first protrusion 6. As a result, only each second tooth 1 is provided with the first protrusion 6, whereas the remaining teeth 1 are not provided with the first protrusion 6.

Fig. 12 shows a modification of the second embodiment. In this modification, the teeth 1 are alternately provided with and without first and second protrusions 6, 9. As a result, only each second tooth 1 is provided with the first and second protrusions 6, 9, whereas the remaining teeth 1 are not provided with the first and second protrusions 6, 9.

The number of teeth 1, which are provided with the first and/or second protrusions 6,9, can be determined without limitation. For example, each third tooth 1 can be provided with and without the first and/or second protrusions 6, 9, and so on.

It is further conceivable that at least one tooth 1 comprises the first protrusion 6 on its left side in Fig. 11 without having a second protrusion 10, while at least one other tooth 1 comprises the first protrusion 6 on its right side in Fig. 11 without having a second protrusion 10.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A generator, in particular for a wind turbine, comprising:
- a stator with a plurality of teeth (1) and slots (2) for coil windings (20), wherein the teeth (1) extend upright from a yoke (3) of the stator in a radial direction of the stator;
- a rotor which is rotatable arranged around or inside the stator and comprises at least one permanent magnet; wherein
- the teeth (1) extend, substantially in parallel to each other, in an axial direction of the stator perpendicular to the radial direction, wherein each tooth (1) has a first end (4) and a second end (5) in the axial direction;
- each tooth (1) has a tooth width in a circumferential direction of the stator perpendicular to the radial direction and the axial direction;
- at least one tooth (1) comprises at least one first protrusion (6) protruding, in a distance from the stator yoke (3), in the circumferential direction, wherein the first protrusion (6) has a protruding length in the circumferential direction; and
- the first protrusion (6) comprises at least one first inclined structure (7) where the protruding length of the first protrusion (1) decreases towards the first end (4) and/or towards the second end (5) of the tooth (1).

2. The generator as set forth in the preceding claim, wherein
the first inclined structure (7) comprises at least one step (8) where the protruding length of the first protrusion stepwise decreases towards the first end (4) and/or towards the second end (5) of the tooth (1).

3. The generator as set forth in any one of the preceding claims, wherein
the first protrusion (6) is formed at a first side of the tooth (1) in the circumferential direction, and the same tooth (1) comprises a second protrusion (9) at a second side of the tooth (1) in the circumferential direction opposite to the first side;
the second protrusion (9) protrudes in a distance from the stator yoke (3), in the circumferential direction, wherein the second protrusion (9) has a protruding length in the circumferential direction; and
the second protrusion (9) comprises at least one second inclined structure (10) where the protruding length of the second protrusion (9) decreases towards the first end (4) and/or towards the second end (5) of the tooth (1).

4. The generator as set forth in the preceding claim, wherein
the first and second protrusions (6, 9) are symmetrically formed at the tooth (1).

5. The generator as set forth in any one of the preceding claims, wherein
a top surface (12) of the at least one tooth (1) is a plane surface and covers at least one of the first and second protrusions (6, 9).

6. The generator as set forth in any one of the preceding claims, wherein
the first protrusion (6) comprises a lower surface (11) facing the stator yoke (3) and being inclined such that a distance between the lower surface (11) and the stator yoke (3) increases along the circumferential direction from the tooth (1) towards the slot (2).

7. Wind turbine comprising a generator according to any one of the preceding claims.

8. A method of manufacturing a stator for a generator, in particular for a wind turbine, comprising the steps of:
- providing a stator yoke (3) of the stator;
- providing a plurality of teeth (1) extending upright from the stator yoke (3) in a radial direction of the stator such that the teeth (1) extend, substantially in parallel to each other, in an axial direction of the stator perpendicular to the radial direction, wherein each tooth (1) has a first end (4) and a second end (5) in the axial direction; and each tooth (1) has a tooth width in a circumferential direction of the stator perpendicular to the radial direction and the axial direction;
- providing at least one first protrusion (6) at at least one tooth (1), the first protrusion (6) protrudes, in a distance from the stator yoke (3), in the circumferential direction, wherein the first protrusion (6) has a protruding length in the circumferential direction; and
- punching the first protrusion (6) to form at least one first inclined structure (7) where the protruding length of the first protrusion (6) decreases towards the first end (4) and/or towards the second end (5) of the tooth (1).

9. The method as set forth in the preceding claim,
wherein in the punching step, at least one step (8) is formed by punching the first protrusion (6) so that the protruding length of the first protrusion stepwise decreases towards the first end (4) and/or towards the second end (5) of the tooth (1), wherein a width of the step (8) in the circumferential direction substantially corresponds to a thickness of a corresponding layer of coil windings (20);
the method further comprises a step of:
winding the layers of the coil windings (20) in slots (2) which are formed between adjacent teeth (1).
